## Europäisches Patentamt
## European Patent Office
## Office européen des brevets

(19)

(11) Veröffentlichungsnummer: **0 005 811**
A1

# (12) EUROPÄISCHE PATENTANMELDUNG

(21) Anmeldenummer: **79101622.3**

(22) Anmeldetag: **28.05.79**

(51) Int. Cl.²: **B 60 R 9/12**

(30) Priorität: **30.05.78 DE 7816134 U**

(43) Veröffentlichungstag der Anmeldung:
**12.12.79** Patentblatt **79 25**

(84) Benannte Vertragsstaaten:
**AT DE FR IT**

(71) Anmelder: **Frey, Dieter**
**Angerstrasse 9**
**D-8100 Garmisch-Partenkirchen(DE)**

(72) Erfinder: **Frey, Dieter**
**Angerstrasse 9**
**D-8100 Garmisch-Partenkirchen(DE)**

(74) Vertreter: **Huss, Carl-Hans, Dipl.-Ing. et al,**
**Rathausstrasse 14**
**D-8100 Garmisch-Partenkirchen(DE)**

(54) **Kraftfahrzeug-Dachträger für die Befestigung von Skiern und anderem Transportgut.**

(57) Ein Kraftfahrzeug-Dachträger für die Befestigung von Skiern und anderem Transportgut, bestehend aus einem für die Breitenanpassung aus zwei verschiebbaren Stücken (1, 1') zusammengesetzten Tragrohr und aus gegeneinander mittels einer Spindel (4) verschiebbaren Klemmteilen (3, 6) für die Befestigung des Dachträgers an der Regenrinne des Fahrzeugdaches. Dabei durchsetzt die das Klemmteil (6) bewegende Spindel (4) das Rohr (1) von oben, und ausserdem ist eine zusätzlich anbringbare und abschliessbare Sicherung vorgesehen mit einem in ein offenes Ende des Tragrohres (1) einsetzbaren, in ihm verschiebbaren Verriegelungsstück (9) sowie einem mit seinem einen Ende (22) auf dem Tragrohr (1) schwenkbar zu befestigenden Sicherheitsbügel (17), dessen gegenüberliegendes Ende (19) einen im Verriegelungsstück einrastbaren Haken (20) aufweist, der durch das Schloss (12) in Schliessstellung blockiert wird, wobei der verriegelte Sicherheitsbügel (17) wiederum ein Lösen der Klemmteile (3, 6) verhindert.

1/1

EP 0 005 811 A1

Croydon Printing Company Ltd

0005811 Patentanwalt Dipl.-Ing. C.-H. Huss
Rathausstrasse 14
D-8100 Garmisch-Partenkirchen

Kraftfahrzeug-Dachträger für die Befestigung von Skiern und anderem Transportgut

---

Die Erfindung bezieht sich auf nachfolgend "Dachträger" genannte Kraftfahrzeug-Dachträger für die Befestigung insbesondere von Skiern, aber auch anderem auf derartigen Trägern beförderten Transportgut.

Diese gibt es in grosser Zahl und verschiedenster Konstruktion, obwohl sie fast alle nach dem gleichen Prinzip konstruiert sind. Sie bestehen allgemein aus einem sich über die Breite des Kraftfahrzeug-Daches erstreckenden, mehrere aus Gummi oder Kunststoff bestehende Skihalterungen aufnehmenden Tragrohr, das in der Regel für die Anpassung an verschiedene Dachbreiten in zwei gegeneinander verschiebbare Rohrstücke unterteilt ist. An den beiden Enden des Tragrohrs sind zweiteilige Klemmen zur Befestigung des Dachträgers an den Regenrinnen des Kraftfahrzeuges vorgesehen, die durch Schrauben oder Spindeln betätigt werden können.

Ebenso sind abschliessbare Skihalter bekannt, die sich von den nicht abschliessbaren dadurch unterscheiden, dass über den Skihaltern ein schwenkbarer Bügel angeordnet ist, dessen eines Ende im eingerasteten Zustand durch ein Schloss verriegelt werden kann. Diesen abschliessbaren Skihaltern wird allgemein der Vorzug gegeben; als nachteilig wird ihr hoher Preis angesehen.

Hier setzt die Erfindung ein, der die Aufgabe zugrunde liegt, einen Dachträger zu schaffen, der als nicht abschliessbarer Dachträger erworben und mit zusätzlich gekauften Teilen vom Käufer selbst einfach, sicher und schnell in einen abschliessbaren Dachträger umgewandelt werden kann. Diese Aufgabe schliesst die spezielle Aufgabe ein, hierzu nur wenige, einfache und deshalb verhältnismässig billige Teile zu benötigen, und den Dachträger ebenso schnell und einfach auch von einem abschliessbaren in einen "normalen" Träger, z.B. für die Benutzung als normalen Gepäckträger, zurückverwandeln zu können.

Man kann also zu einem im Verhältnis geringeren Preis einen nicht abschliessbaren, aber als solcher voll funktionsfähigen Dachträger erwerben und, solange man billigere und deshalb weniger zum Diebstahl verleitende Skier benutzt oder sich in als in dieser Beziehung nicht als gefährlich geltende Gegenden begibt, diesen Träger benutzen. Wenn dann teuere Skier erworben werden, oder wenn in diebstahlgefährdete Gegenden gefahren wird, kann der Besitzer eines Dachträgers nach der Erfindung wenige zusätzliche Teile erwerben, mit denen er seinen Träger mit wenigen Handgriffen in einen abschliessbaren Träger umwandeln kann. Ebenso kann aber der Inhaber eines komplettierten Dachträgers auch die Zusatzteile einfach entfernen und dann den Träger nicht nur für den ungesicherten Transport von Skiern, sondern auch anderen Transportgutes benutzen. Der Benutzer kann also sozusagen mit wenigen Handgriffen einen "Sommer-Dachträger" in einen "Winter-Dachträger" verwandeln und umgekehrt.

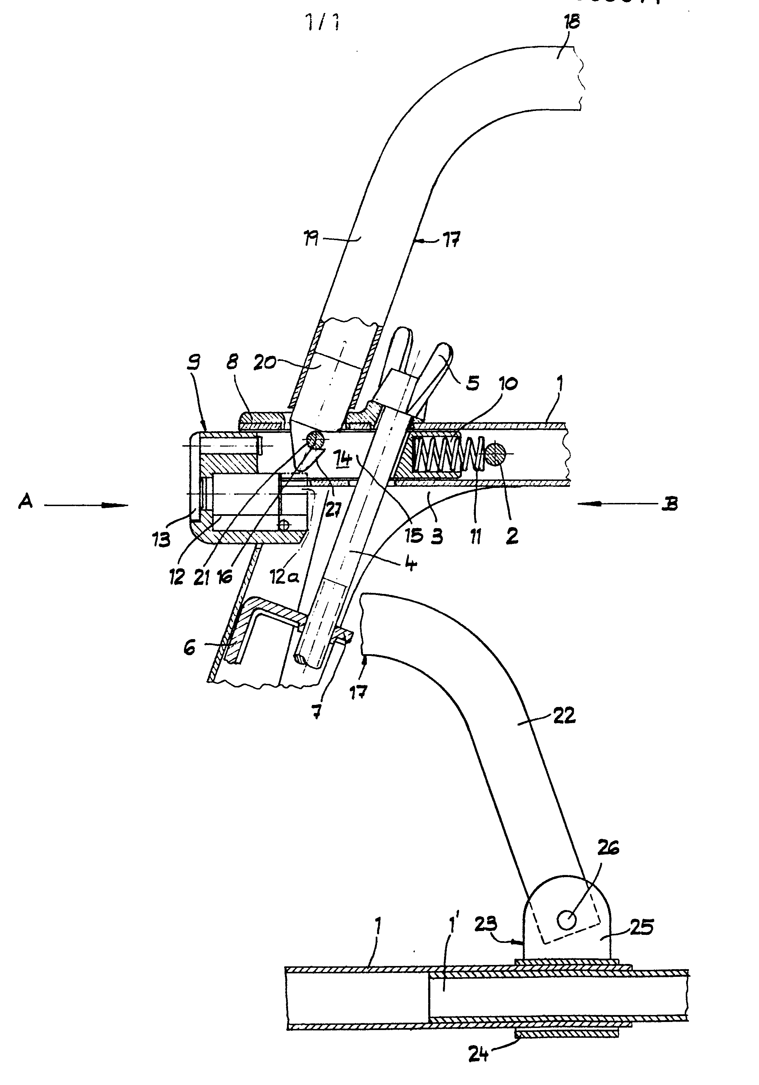

Ein Ausführungsbeispiel der Erfindung ist in der Zeichnung am Vertikalschnitt einer Dachträgerhälfte veranschaulicht und die Erfindung anhand dieses Beispiels ohne Anspruch auf Vollständigkeit beschrieben.

Bei dem dargestellten Beispiel besteht der Dachträger aus zwei Rohrstücken, z.B. Vierkantrohrstücken 1, deren Gesamtlänge im zusammengeschobenen Zustand der Breite eines Personenwagendaches der geringsten im Handel befindlichen Breite entspricht. Hierzu können die beiden Rohrstücke 1 auf ein Mittelstück 1' geschoben sein, dessen Aussenabmessungen mit entsprechender Toleranz den Innenabmessungen der Rohrstücke 1 entspricht, aber man kann auch einfach das eine Rohrstück innerhalb des anderen teleskopartig verschiebbar gestalten.

Am gegenüberliegenden freien Ende eines jeden Rohrstückes 1 ist mit Hilfe eines

- 4 -

Niets 2 ein Stützfuss 3 befestigt, dessen unteres nicht dargestelltes Ende sich in der Regenrinne am Fahrzeugdach abstützt. Ein sich am Stützfuss führendes, am unteren nicht dargestellten Ende einwärts gebogenes, die Regenrinne von unten umgreifendes Klemmteil 6 kann mit Hilfe einer Spindel 4 mit Handhabe 5 betätigt und so der Träger mittels der Enden von 3 und 6 an der Regenrinne festgeklemmt werden. Hierzu ist in dem abgebogenen Ende 7 des Klemmteils 6 ein Innengewinde angebracht, das mit dem Aussengewinde der Spindel 4 zusammenwirkt.

Zur Schonung des Endbereiches des Rohrstückes 1 ist auf dieses eine Kunststoffkappe 8 mit einer entsprechenden Schrägfläche gesetzt, gegen die die Unterfläche der Handhabe 5 anliegt.

In das freie offene Ende des Rohrstückes 1 ist von aussen in Pfeilrichtung A ein allgemein mit 9 bezeichnetes Verriegelungsstück einschiebbar. Wenn das Rohrstück 1 im Querschnitt viereckig ist, ist auch das Verriegelungsstück viereckig und entsprechend dimensioniert und braucht gegen Verdrehung nicht gesichert zu werden. Bei einem runden Querschnitt des Rohrstücks 1 erfolgt die Sicherung des Verriegelungsstücks gegen Verdrehung in einer dem Fachmann wohlbekannten Weise, z.B. durch einen in einer Nut geführten Zapfen (nicht dargestellt).

Das Verriegelungsstück 9 nimmt an seinem inneren Ende in einer Ausnehmung 10 eine Druck-

- 5 -

feder 11 auf, die sich gegen den Niet 2 abstützt. Natürlich kann die Feder auch auf eine andere geeignete Weise lösbar mit der Rückseite des Verriegelungsstückes, z.B. auf einen angespritzten Zapfen aufgesteckt, verbunden sein.

An dem der Feder 11 gegenüberliegenden äusseren Ende ist in das hier entsprechend vergrösserte Verriegelungsstück ein bekanntes handelsübliches Schloss 12 eingesetzt und befestigt, dessen Schlüsselloch durch einen seitwärts ausschwenkbaren Deckel 13 bei Nichtgebrauch abgedeckt sein kann.

Im mittleren Bereich weist das Verriegelungsstück 9 einen Schlitz 15 auf, in dessen Seitenwänden 14 ein Verriegelungszapfen 16 gelagert ist. Ausserdem geht quer durch den Schlitz 15 die Spindel 4, die gleichzeitg einen Anschlag für die durch die Feder 11 bewirkte, später erläuterte Rückbewegung des Verriegelungsstückes in Pfeilrichtung B bildet.

Ausser dem Verriegelungsstück 9 gehört zu den, den einfachen Dachträger in einen abschliessbaren Träger umrüstenden Teilen ein allgemein mit 17 bezeichneter Sicherheitsbügel, dessen waagerechter, parallel zum Rohrstück 1 liegender Teil 18 in bekannter Weise so über der Oberfläche der vom Träger aufgenommenen Skier liegt, dass diese zwischen Rohrstück 1 und Bügel 17 ohne Hochklappen desselben nicht herausgenommen werden können.

In das abgewinkelte Ende 19 des Bügels ist ein Haken 20 eingepasst, dessen herausragendes Ende beim dargestellten Beispiel kegelförmig ausgebildet ist und eine mit dem Verriegelungszapfen 15 zusammenwirkende Hakenöffnung 21
aufweist.

Das innere Ende 22 des Bügels 17 kann in
einfacher Weise mit einem Lagerbock 23 versehen
sein, der aus einer das Rohrstück 1 umgebenden
Manschette oder Muffe 24 besteht, von der parallel im Abstand der Breite des Bügels zwei Lappen
25 abstehen, zwischen denen das Bügelende, um
eine Achse 26 schwenkbar, vernietet ist. Damit
ist der Lagerbock 23 Teil des Bügels 17, d.h.
er ist mit diesem und nicht mit dem Träger unlösbar verbunden, so dass er zur Befestigung des
Bügels am Dachträger nur auf das Rohrstück 1
aufgeschoben werden muss.

Die eigentliche Verriegelung geht wie folgt
vor sich: Wenn der vorher zum Einlegen der Skier
hochgeklappte Bügel 16 in die Verriegelungsstellung heruntergeschwenkt wird, läuft die Schräge
27 des Hakenendes 20 auf den Verriegelungszapfen
16 auf und verschiebt das Verriegelungsstück 9
als Ganzes unter Zusammendrücken der Feder 11 in
Pfeilrichtung A in das Innere des Rohrstückes 1
hinein, bis der Zapfen 16, an 27 entlanggleitend,
in die Öffnung 21 des Hakens hineinschnappt, wonach das Verriegelungsstück durch die Feder 11
in Pfeilrichtung B zurückgeschoben und dadurch
der Zapfen 16 fest in die Hakenöffnung hineingedrückt wird. Nun kann das Ende des Hakens 20
durch das in die strich-punktiert dargestellte
Stellung verschwenkte Teil 12a des Schlosses 12
verriegelt werden, und der Bügel ist gesichert.

- 7 -

Auch die Spindel 4 kann bei abgeschlossenem Bügel nicht mehr entfernt werden, weil bereits nach einer geringen Verdrehung einer der Flügel ihrer Handhabe 5 an den Bügel 17 anstösst.

Zum Entriegeln wird, nachdem die Schlosssperre beseitigt ist, das Verriegelungsstück 9 als Ganzes in Pfeilrichtung A gegen die Kraft der Feder soweit zurückgeschoben, bis der Zapfen 16 aus der Hakenöffnung heraustreten kann.

Bei einer zweckmässigen Ausführungsform der Erfindung sind für jeden Träger zwei jeweils in der Mitte schwenkbar gelagerte Bügel vorgesehen, die der Benutzer aber natürlich getrennt erwerben kann.

Das freie offene Ende eines Rohrstückes 1 kann, solange der Dachträger als nicht abschliesbarerer Träger verwendet wird, durch einen eingepassten Stopfen aus Kunststoff verschlossen und damit gegen das Eindringen von Schmutz, Feuchtigkeit usw. geschützt werden (nicht dargestellt).

- 1 -

Patentansprüche

1. Kraftfahrzeug-Dachträger für die Befestigung von Skiern und anderem Transportgut, bestehend aus einem für die Breitenanpassung aus zwei verschiebbaren Stücken zusammengesetzten, die Skihalterungen aufnehmenden Tragrohr und aus gegeneinander mittels einer Spindel verschiebbaren Klemmteilen für die Befestigung des Dachträgers an den Regenrinnen des Fahrzeug-Daches, dadurch g e k e n n z e i c h - n e t , dass die das Klemmteil (6) bewegende Spindel (4) das Rohr (1) von oben durchsetzt und eine zusätzlich anbringbare und abschliessbare Sicherung vorgesehen ist, mit einem in ein offenes Ende des Tragrohres (1) einsetzbaren, in ihm verschiebbaren und ein Schloss (12) aufnehmenden Verriegelungsstück (9) sowie einem mit seinem einem Ende auf dem Tragrohr (1) schwenkbar zu befestigenden Sicherheitsbügel (17), dessen gegenüberliegendes Ende einen im Verriegelungsstück einrastbaren Haken (20) aufweist.

2. Dachträger nach dem Anspruch 1, dadurch g e k e n n z e i c h n e t , dass das Verriegelungsstück (9) sich mit einer Feder (11) gegen einen Anschlag (2) im Innern des Tragrohres (1) abstützt, am äusseren freien Ende ein Schloss (12) aufnimmt und im mittleren Bereich einen Schlitz (15) aufweist, in dem quer zur Längsachse ein Verriegelungszapfen (16) angeordnet ist und der von der Spindel (4) der Dachträger-Klemmeinrichtung (3, 6-7) durchsetzt wird.

3. Dachträger nach dem Anspruch 1, dadurch g e k e n n z e i c h n e t , dass der Anschlag (2) für die Feder (11) der einen Stützfuss (3) mit dem Tragrohr (1) verbindende, letzteres quer durchsetzende Niet ist.

4. Dachträger nach dem Anspruch 1, dadurch g e k e n n z e i c h n e t , dass der Sicherheitsbügel (17) am aussen liegenden Ende in einem mit dem Verriegelungszapfen (16) zusammenwirkenden Haken (20) endet.

5. Dachträger nach den Ansprüchen 1 und 4, dadurch g e k e n n z e i c h n e t , dass der Haken (20) mindestens auf der inneren, dem Verriegelungszapfen (16) zugewandten Seite eine Schrägfläche (27) aufweist.

6. Dachträger nach dem Anspruch 1, dadurch g e k e n n z e i c h n e t , dass mit dem innen liegenden Ende (22) des Sicher-

0005811

- 3 -

heitsbügels (17) über eine Schwenkachse (26)
ein Lagerbock (23) verbunden ist, der eine auf
das Rohrstück (1) leicht aufschiebbare Muffe
(25) aufweist.

0005811

# EUROPÄISCHER RECHERCHENBERICHT

**Europäisches Patentamt**

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 2 619 815 (ORIS METALLBAU)<br>* Fig. *<br><br>-- | 1 | B 60 R   9/12 |
| | DE - A - 1 907 180 (L. BERCHTOLD)<br>* Fig. 1 und 4 *<br><br>-- | 1,6 | |
| | DE - U - 1 956 208 (F. MAIER)<br>* Fig. 1 und 7 *<br><br>-- | 1 | RECHERCHIERTE SACHGEBIETE (Int. Cl.²)<br><br>B 60 R   9/00 |
| | DE - U - 1 836 939 (H. Müller)<br>* Fig. 1 *<br><br>-- | 1 | |
| | US - A - 3 638 844 (J. BRONSON)<br>* Fig. 2 *<br><br>-- | 1 | |
| | US - A - 3 601 294 (DONALD J. GJESDAHL)<br>* Fig. 2 und 5 *<br><br>---- | 1 | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |

| X | Der vorliegende Recherchenbericht wurde für alle Patentansprüche erstellt. | &: Mitglied der gleichen Patentfamilie, übereinstimmendes Dokument |
|---|---|---|

| Recherchenort | Abschlußdatum der Recherche | Prüfer |
|---|---|---|
| Berlin | 31-07-1979 | BECKER |

EPA form 1503.1   06.78